# EUROPEAN PATENT APPLICATION

(11) **EP 2 447 823 A2**
(43) Date of publication of application: **02.05.2012**
(21) Application number: 11187002.8
(22) Date of filing: 27.10.2011
(51) Int. Cl.: G06F 3/048

(54) **Method and apparatus for gesture recognition**

(30) Priority: 29.10.2010 US 915452
(71) Applicant: Honeywell International, Inc., Morristown, NJ 07962-2245 (US)
(72) Inventor: Sparks, Robert W., Morristown, NJ New Jersey 07962-2245 (US); Engels, Jary, Morristown, NJ New Jersey 07962-2245 (US); Woltkamp, John, Morristown, NJ New Jersey 07962-2245 (US)
(74) Representative: Buckley, Guy Julian

(57) **Abstract**

A touchscreen device is configured to display a number of user interface elements in accordance with a menu hierarchy. Upon receipt of a predetermined touchscreen gesture (e.g., the circular motion of a manipulator) the menu hierarchy is bypassed and the user is given immediate control over a selected function, for example, a tuning function such as audio volume, screen contrast, and the like.

## Description

### FIELD OF THE INVENTION

The present invention generally relates to user interfaces, and more particularly relates to gesture recognition in touchscreen user interfaces of the type used in vehicles, aircraft, and the like.

### BACKGROUND OF THE INVENTION

It is desirable in a variety of contexts to replace traditional electro-mechanical controls such as knobs, switches, sliders, buttons, and the like with comparable control systems utilizing computer user interfaces. Touchscreen devices, for example, provide a convenient way to consolidate controls using user interface elements such as buttons, drop-down menus, radio buttons, and other such controls, thereby reducing the "real estate" needed for mechanical actuators and controls. This is particularly desirable in the context of aircraft cockpits and automobile cabins, where space is always at a premium.

The density of controls provided by touchscreen displays comes with a cost, however. Since the user interface elements are typically arranged in a hierarchical menu structure with only a subset of elements per page (to reduce the necessary screen size), a user must typically navigate through multiple menus or pages to reach the desired control function. For example, in the aircraft cockpit context, the pilot often desires to reduce or increase the volume of his or her headset. To perform this task from the primary or default display screen, it is often necessary to navigate through two or more menu screens. The same issues arise with respect to changing display screen contrast and other such "tuning functions."

Accordingly, it is desirable to provide improved user interface methods that allow simplified access to certain functions. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

In accordance with one embodiment, a user interface method includes displaying, on a touchscreen display, a plurality of user interface elements, entering a first mode, the first mode including providing a signal responsive to touch events associated with the user interface elements; determining whether a touch event corresponds to a predetermined touchscreen gesture; and switching from the first mode to a second mode when the touch event corresponds to the predetermined touchscreen gesture, the second mode including providing, for the duration of the touch event, a signal indicative of a value of a selected function that is not associated with the displayed plurality of user interface elements.

A touchscreen device in accordance with one embodiment includes :a touchscreen display configured to receive a touch event from a user, and a processor coupled to the touchscreen display. The processor is configured to instruct the touchscreen display to display a plurality of user interface elements; receive a signal associated with the touch event; enter a first mode, the first mode including providing a signal responsive to the touch event when the touch event is associated with one or more of the user interface elements; determine whether the touch event corresponds to a predetermined touchscreen gesture; and switch from the first mode to a second mode when the touch event corresponds to the predetermined touchscreen gesture, the second mode including providing, for the duration of the touch event, a signal indicative of a value of a tuning function.

A cockpit control device in accordance with one embodiment includes a touchscreen device having a plurality of user interface elements displayed thereon, including at least one user interface control configured to react to a touch event occurring within a region occupied by the at least one user interface control. The touchscreen device is configured, upon receipt of a predetermined touchscreen gesture, to temporarily ignore the at least one user interface control and provide immediate access to the tuning function such that a value of the tuning function is modified based on the predetermined touchscreen gesture.

### BRIEF DESCRIPTION OF THE DRAWINGS

The present invention will hereinafter be described in conjunction with the following drawing figures, wherein like numerals denote like elements, and

FIG. 1 illustrates a conceptual block diagram of a touchscreen system in accordance with one embodiment of the invention;

FIG. 2 illustrates operation of a touchscreen device in accordance with one embodiment invention;

FIG. 3 illustrates operation of a touchscreen device in accordance with an alternate embodiment of the invention;

FIG. 4 illustrates operation of a touchscreen device in accordance with another embodiment of the invention;

FIG. 5 illustrates operation of a touchscreen device in accordance with another embodiment of the invention;

FIG. 6 depicts various types of touchscreen gestures applicable to the present invention; and

FIG. 7 conceptually depicts a hierarchy of display pages including various user interface elements.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

In general, the present invention is directed to a touchscreen device configured, in "normal" mode, to display a number of user interface elements that are grouped together in pages in accordance with a conventional hierarchy. However, upon receipt of a predetermined touchscreen gesture (e.g., the circular motion of a finger) the menu hierarchy is bypassed and the user is given immediate control over a selected function, for example, a tuning function such as audio volume, screen contrast, or the like.

As a preliminary matter, it will be appreciated that the user interface and gestural input methods described below may be implemented in a variety of devices, including, for example, cellular phones (or "smartphones"), personal data assistants (PDAs), global positioning (GPS) systems, navigation systems and displays, e-book readers, tablet computers, netbook computers, point-of-sale devices, gaming devices, pen pads, and any other electronic apparatus that may include a touchscreen device used to traverse a multipage hierarchy. Since the systems disclosed below are particularly useful in contexts where it is not desirable for the user to be distracted by the display for extended lengths of time -- e.g., while driving a vehicle or piloting an aircraft -- the illustrated examples may, without loss of generality, be described in the context of aircraft cockpit control systems. However, the invention is not so limited.

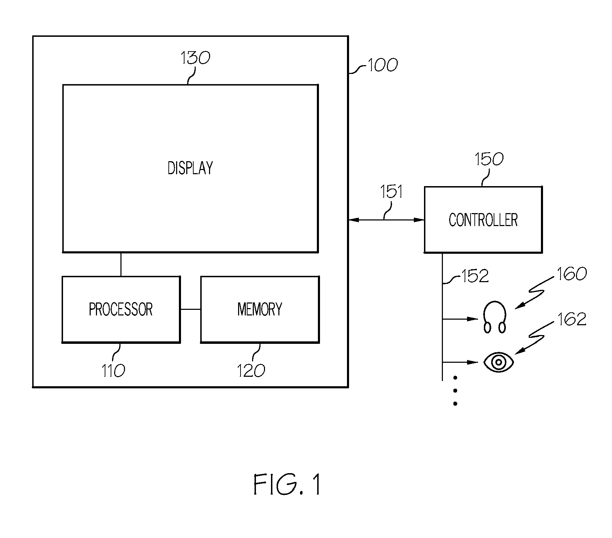

Referring now to FIG. 1, an exemplary touchscreen device 100 generally includes a touchscreen display (or simply "display") 130, a processor (e.g., CPU, microcontroller) 110, and a memory 120. Touchscreen device 100 is configured to communicate with an external controller 150, which may be part of a larger control system, such as an aircraft control system via a suitable data connection 151 (e.g., hard-wired, wireless, or the like). Controller 150 may also be adapted to provide additional feedback signals to a user (via one or more connections 152) such as audio feedback 160 and/or visual feedback 162 through various switches, knobs, sliders, keyboards, and other user interface components.

Touchscreen display 130 (in conjunction with processor 110) is configured to interact with one or more manipulators (not shown), such as a stylus, one or more user fingers, etc. The manipulators, when in contact or close proximity to touchscreen 130, produces a signal that is received and interpreted as a touch event by processor 110, which is configured (through any combination of hardware and software components) to determine the location and any other selected attributes of the touch event. The touch events may be stored within a memory, such as memory 120, and/or communicated to controller 150 for further control actions, as may be appropriate in the particular application.

Display 130 may include a thin, transparent touch sensor component superimposed upon a display (e.g., an LCD display or other type of display, not illustrated) that is viewable by a user. Examples of such displays include capacitive displays, resistive displays, surface acoustic wave (SAW) displays, optical imaging displays, and the like. Display 130 may also provide haptic feedback to the user -- e.g., a clicking response or keypress feel in response to a touch event. The present embodiments contemplate any suitable touch sensitive surface or sensor.

Touchscreen display 130 may have any desired 2D or 3D rectilinear and/or curvilinear shape. Touchcreen display 130 may also be rigid or flexible, as is the case with various organic LED (OLED) display. The illustrated embodiments, without loss of generality, generally depict rectangular regions oriented in a portrait or landscape orientation (i.e., with respect to a user viewing the device); however, the present invention comprehends any range of shapes, sizes, and orientations.

It will be appreciated that the block diagram of FIG. 1 has been simplified for the purpose of conciseness, and that practical embodiments might include any number of other components, such as a graphics controller, one or more additional memory devices, (e.g., flash memory, hard drives, MicroSD cards, etc.), a power module (e.g., batteries, charging circuits, etc.), a peripheral interface, one or more external ports (e.g., USB, Firewire, etc.), an RF transceiver module (e.g., in accordance with IEEE 802.11, Zigbee, etc.), an audio module, and one or more sensors such as acceleration sensors (e.g., three-axis sensors), orientation sensors, and proximity sensors, and additional I/O components (such as buttons, LEDs, etc.). For the purpose of conciseness, such components have not been illustrated.

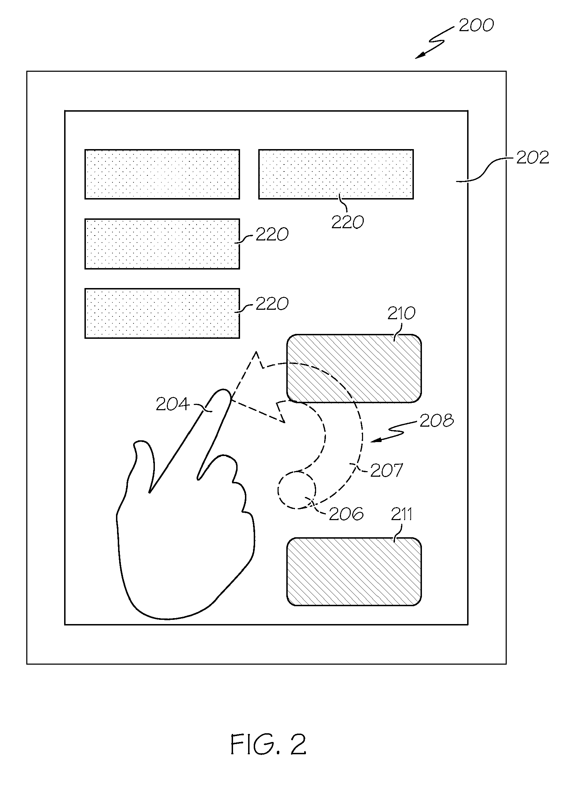

FIG. 2 illustrates a particular touchscreen device 200 corresponding to one embodiment of touchscreen device 100 illustrated in FIG. 1. As shown, touchscreen device includes a touchscreen display 202 having a number of user interface elements 210, 211, and 220 displayed thereon. Possible user interface elements include, but are not limited to, text objects, text boxes, buttons, check boxes, radio buttons, static images, video images, animations, navigation icons, widgets, windows, drop-down menus, hyperlinks, and any other interactive or non-interactive graphical element.

In general, the user interface elements will include "control" elements that receive input from manipulator 204 (i.e., via a "touch event") and react accordingly (illustrated as elements 210 and 211 in FIG. 2). The user interface elements may also include various non-control elements such as images, text, annunciators, etc., which may change over time, but do not react to a touch event from manipulator 204.

In general, touchscreen device 200 operates in at least two modes. The first mode (the "normal" or "default" mode) corresponds to a standard operational mode in which user interface elements 210 and 211 respond in accordance with touch events in the normal fashion, and touchscreen device 200 provides a signal (e.g., through data connection 151 in FIG. 1) that is responsive to touch events associated with the user interface elements. For example, if the user, via manipulator 204, taps element 211, the touchscreen display 202 may change to a different page of user interface elements (e.g., a main menu screen, or the like). Similarly, element 210 may correspond to a slider element that, in the first mode, is used to change the value of some attribute or function when manipulator 204 slides or drags over it.

In accordance with the present invention, touchscreen device 200 also operates in a second mode, which is entered when touchscreen device 200 determines that a touch event corresponds to a predetermined touchscreen gesture 208. In the second mode, touchscreen device 200 provides, for the duration of the touch event, a signal indicative of a value of a selected function that is not associated with the currently displayed user interface elements 220, 210, and 211. That is, by using a particular gesture or gestures, the user can quickly bypass the standard menu hierarchy and directly perform the selected function.

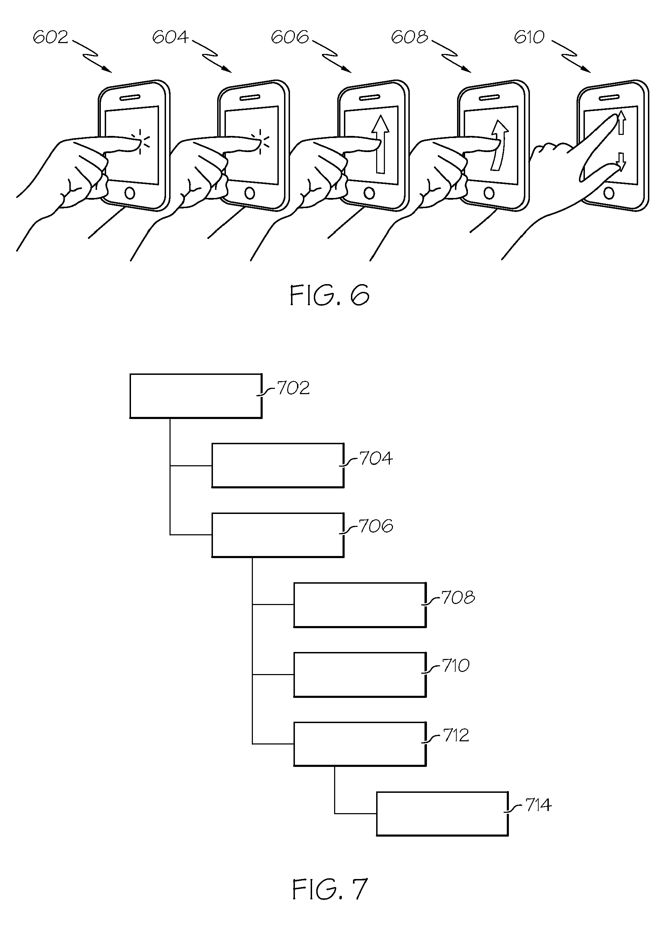

As mentioned previously, the entire set of available user interface elements (elements 210, 211, and 220 being just a few) will typically be grouped into a number of pages according to a menu hierarchy. This is illustrated conceptually in FIG. 7, wherein the hierarchy might include a top menu or page 702, followed by "child" pages 704 and 706. Page 706 may also have child pages 708, 710, and 712, which itself may have a child page 714. Traversing this hierarchy will typically require the user to tap one or more buttons ("back," "home," "forward", etc.) or navigate "bread crumbs" (i.e., a hierarchy trail typically displayed at the top or bottom of display 202).

In accordance with one embodiment of the invention, the menu hierarchy (702-714) includes a user interface element corresponding to the selected function, but switching from the first mode to the second mode includes bypassing the menu hierarchy to modify the value of the selected function directly.

The predetermined touchscreen gesture may comprise any single or multi-touch event or combination of events. With brief reference to FIG. 6, for example, typical touchscreen gestures include tap (602), double tap (604), drag (606), flick (608), and pinch/multi-touch (610). The gestures shown in FIG. 6 are provided by way of example, and are not intended as limiting the range of predetermined touchscreen gesture.

Referring again to FIG. 2, in the illustrated example a circular drag motion is used as a predetermined touchscreen gesture 208. That is, the user places the manipulator 204 in contact with touchscreen display 202 at an initial position 206, and then drags in a circular path 207, as shown. In this embodiment, it may be desirable to change the value of the selected function proportionally to the arc subtended by the circular path 207 with respect to the initial position 206. For example, the volume of the user's headset may be increased when the path 207 moves clockwise, and decreased when the path 207 moves counterclockwise. Other linear or non-linear relationships between the circular path 207 and the value of the selected function may also be used.

While touchscreen gesture 208 is being performed, and touchscreen device 200 is in the second mode, the sweeping or dragging of manipulator 204 over element 210 preferably does *not* trigger the function usually provided by element 210 during the first mode (e.g., the slider function described in the example above), even though element 210 is still being displayed. That is, it is preferable that the user not worry about activating other user interface elements when he or she is performing the touchscreen gesture 208, and that touchscreen device 200 temporarily ignores any contact with user interface element 210 and instead provides immediate access to the selected function.

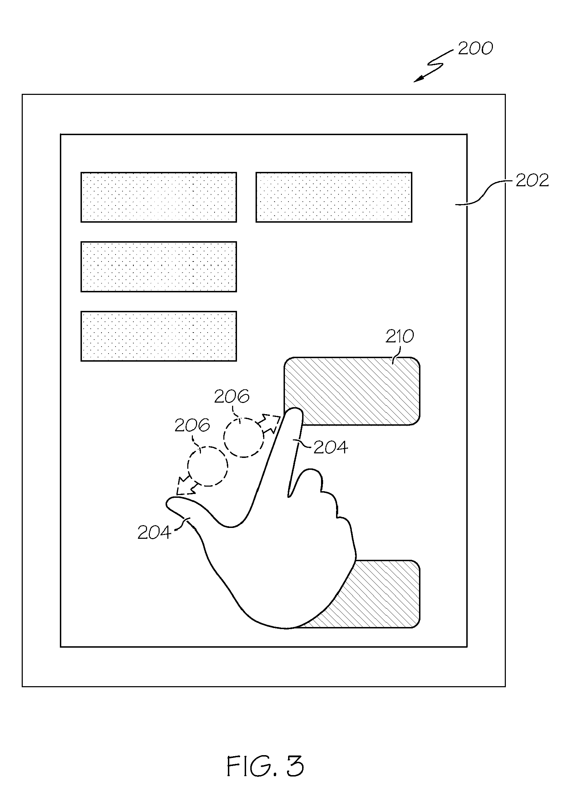

FIG. 3 shows an alternate embodiment in which the predetermined touchscreen gesture is a pinching gesture made with two digits or manipulators 204, as shown. In this embodiment, the value of the selected function is increased and decreased (linearly or nonlinearly) based on the distance between digits 204 with respect to the distance between the initial positions 206 of digits 204. For example, the brightness and/or contrast of touchscreen display 202 may be increased and decreased using this gesture.

Touchscreen device 100 may respond to multiple predetermined touchscreen gestures, each corresponding to a particular selected function. That is, one gesture may be used to control headset volume, while another is used to control the contrast and brightness of display 202. The gestures, and the way that they are mapped to selected functions, may be configurable by the user or pre-stored within touchscreen device 100 (e.g., memory 120 in FIG. 1). Furthermore, one predetermined gesture may be used to enter the second mode, and then one or more additional predetermined gestures may be used to control the value of the selected function or functions.

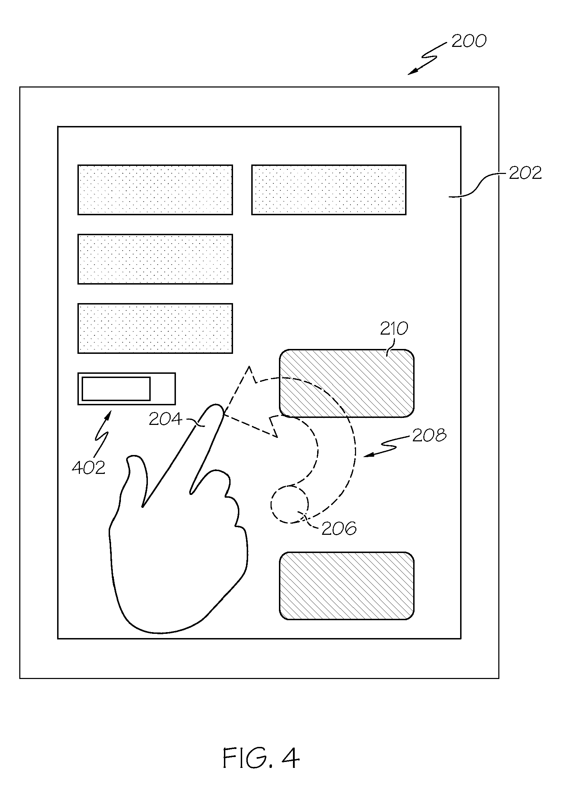

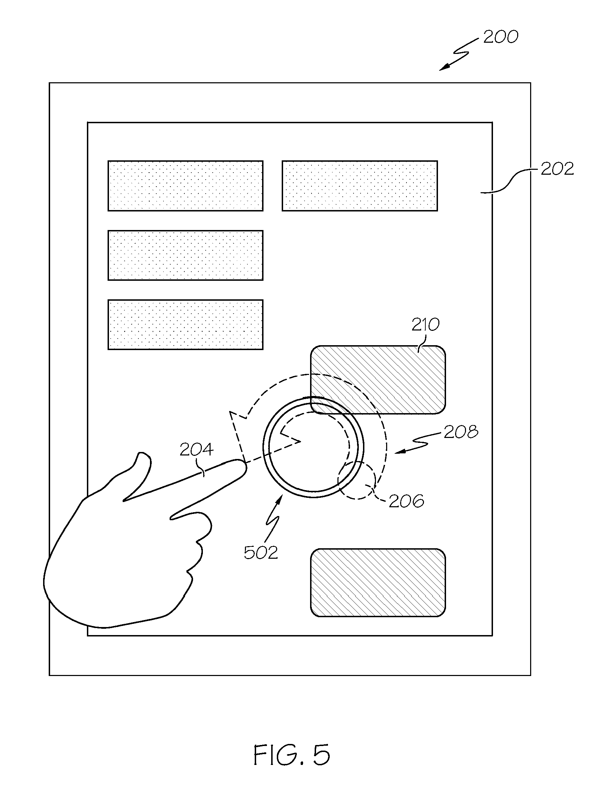

In accordance with another embodiment, touchscreen device 200 may temporarily display a graphical depiction of the value of the tuning function while the predetermined touchscreen gesture 208 is being performed. That is, referring to FIG. 4, a bar 402 or other such graphic may be displayed as the value of the selected function is altered. In the illustrated embodiment, for example, bar 402 may expand in size to the right as the value is increased, and, conversely, contract in size as the value is decreased. An alternate graphical depiction is shown in FIG. 5, in which a typical circular knob 505 is displayed temporarily. Both of these embodiments provide an intuitive way of confirming to the user that the second mode has been successfully entered, and that the selected function is currently being modified. It will be understood that the examples shown in FIGS. 4 and 5 are in no way limiting, and that any suitable graphical depictions such as dials, needle displays, segmented bar graphs, and the like may be used.

The selected function that is controlled via the predetermined touchscreen gesture may be any function that the user would typically control via touchscreen device 100, or indeed any other function. In one embodiment, the selected function is a "tuning function" -- i.e., a function that "tunes" some aspect of the user's interaction with touchscreen device 100 or some other mechanical or electro-mechanical control in the vicinity of the user. As mentioned above, typical tuning functions include, for example, the volume of an audio signal provided to the user (160 in FIG. 1), the display characteristics of touchscreen device 100 (e.g., brightness and/or contrast). Other include, with out limitation, changing presets, changing frequency, selecting from a list of options (e.g, a pull-down menu), altering a squelch setting, providing audio equalization, and the like.

In general, a computer program product in accordance with one embodiment comprises a computer usable medium (e.g., standard RAM, an optical disc, a USB drive, or the like) having computer-readable program code embodied therein, wherein the computer-readable program code is adapted to be executed by processor 110 (working in connection with an operating system) to implement the methods and systems described above. The program code may be implemented in any desired language, and may be implemented as machine code, assembly code, byte code, interpretable source code or the like (e.g., C, C++, Java, or the like). The combination of code and/or processor hardware may be logically and functionally partitioned into various modules -- for example, a touchscreen event interface module, a touchscreen event interpretation module, and a signal interface module.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A user interface method comprising:
displaying, on a touchscreen display, a plurality of user interface elements;
entering a first mode, the first mode including providing a signal responsive to touch events associated with the user interface elements;
determining whether a touch event corresponds to a predetermined touchscreen gesture; and
switching from the first mode to a second mode when the touch event corresponds to the predetermined touchscreen gesture, the second mode including providing, for the duration of the touch event, a signal indicative of a value of a selected function that is not associated with the displayed plurality of user interface elements.

2. The user interface method of claim 1, wherein the selected function is a tuning function associated with a user's interaction with the touchscreen display.

3. The method of claim 2, wherein the tuning function is a volume level of an audio signal configured to be provided to the user.

4. The method of claim 2, wherein the tuning function is a visual characteristic of the touchscreen display.

5. The method of claim 1, wherein the predetermined touchscreen gesture includes a circular motion.

6. The method of claim 5, wherein the circular motion starts from an initial position on the touchscreen display that is not associated with the user interface elements, and wherein the value of the tuning function is based on the arc subtended by the circular motion with respect to the initial position.

7. The method of claim 1, further including temporarily displaying a graphical depiction of the value of the tuning function during the touch event.

8. The method of claim 1, wherein:
the user interface elements are displayed in accordance with a menu hierarchy;
the menu hierarchy includes a user interface element corresponding to the selected function; and
the switching from the first mode to the second mode includes bypassing the menu hierarchy to modify the value of the selected function.

9. The method of claim 2, wherein the plurality of user interface elements are displayed on a touchscreen display integrated into a cockpit display system.

10. The method of claim 9, wherein the tuning function is a volume level of an audio signal configured to be provided to a pilot, or a visual characteristic of the touchscreen display.
